# FASCICULE DE BREVET EUROPEEN

(11) **EP 4 141 850 B1**
(45) Date de publication et mention de la délivrance du brevet: **20.03.2024**
(21) Numéro de dépôt: 22189154.2
(22) Date de dépôt: 06.08.2022
(51) Int. Cl.: G09F 3/12, G09F 7/06, G09F 13/04, G09F 23/00, G09F 23/04

(54) **EQUIPEMENT ELECTRIQUE COMPRENANT UN BADGE RETROECLAIRE ET UN RECEPTEUR INFRAROUGE**
ELEKTRISCHE ANLAGE MIT EINEM HINTERGRUNDBELEUCHTETEN BADGE UND EINEM INFRAROTEMPFÄNGER
ELECTRICAL EQUIPMENT COMPRISING A BACKLIT BADGE AND AN INFRARED RECEIVER

(30) Priorité: 30.08.2021 FR 2109042
(43) Date de publication de la demande: 01.03.2023
(73) Titulaire: Sagemcom Broadband SAS, 92270 Bois-Colombes (FR)
(72) Inventeur: SUSINI, Dominique, 92500 RUEIL MALMAISON (FR); FERREIRA, Arnaud, 92500 RUEIL MALMAISON (FR); COFFINET, Arnaud, 92500 RUEIL MALMAISON (FR)
(74) Mandataire: Cabinet Boettcher

(56) Documents cités:
- CN-U- 204 288 726
- JP-A- 2005 084 221
- US-A1- 2013 044 459

## Description

L'invention concerne le domaine des équipements électriques comprenant un boîtier sur lequel est formé un motif représentant par exemple un logo ou une marque, et susceptibles d'être commandés par des signaux de communication infrarouges.

### ARRIERE PLAN DE L'INVENTION

On connaît des équipements électriques, et notamment des équipements électriques qui intègrent des moyens de restitution audio, qui comprennent un boîtier recouvert au moins partiellement par un tissu acoustique.

Ces équipements sont par exemple des enceintes (éventuellement connectées et ou/portables), des décodeurs, des passerelles résidentielles, etc.

Certains de ces équipements doivent pouvoir être commandés par des signaux de communication infrarouges émis par une télécommande. Or, le tissu acoustique atténue fortement les signaux de communication infrarouges, de sorte que cette fonction est relativement complexe à mettre en oeuvre (tout au moins dans une zone du boîtier recouverte par le tissu).

La plupart de ces équipements comprennent par ailleurs un motif formé sur leur boîtier et représentant par exemple une marque ou un logo permettant d'identifier l'équipement ou le fabricant de l'équipement. On envisage de rétroéclairer ce motif pour améliorer sa visibilité et l'esthétique générale de l'équipement en fonctionnement.

Or, à nouveau, il est peu pratique de mettre en oeuvre l'éclairage d'un motif au travers d'un tissu acoustique, car le rendu de l'éclairage est altéré par le tissu. De même, il est difficile de mettre en oeuvre au travers du tissu une fonction lumineuse, telle qu'un témoin de veille/activité.

Le document US 2013/044459 A1 décrit un équipement comprenant un motif rétroéclairé réalisé au moyen d'un badge opaque comprenant une série d'éléments transparents ou translucides.

### OBJET DE L'INVENTION

L'invention a pour objet une solution permettant de rétroéclairer un motif formé sur le boîtier d'un équipement pouvant comprendre un tissu acoustique, de communiquer efficacement avec l'équipement via des signaux de communication infrarouges, et de réduire le coût de l'équipement.

### RESUME DE L'INVENTION

En vue de la réalisation de ce but, on propose un équipement électrique, comportant :
- un boîtier comprenant un trou traversant le boîtier ;
- un badge fixé au boîtier et positionné sur le trou, le badge comportant une première portion comprenant au moins un premier matériau qui est transparent ou translucide à la lumière visible, et une deuxième portion comprenant au moins un deuxième matériau qui est opaque à la lumière visible et transparent ou translucide à la lumière infrarouge, la première portion et la deuxième portion formant respectivement sur une surface externe du badge un motif et un fond distinct du motif ;
- un émetteur et un récepteur situés à l'intérieur du boîtier en regard du trou et donc du badge, l'émetteur étant agencé pour émettre des signaux lumineux visibles au travers du badge de manière à éclairer le motif sans éclairer le fond, et le récepteur étant agencé pour recevoir au travers du badge des signaux de communication infrarouges émis par un dispositif distinct de l'équipement électrique.

Le badge, qui comprend une première portion laissant passer la lumière visible et une deuxième portion opaque à la lumière visible, est donc rétroéclairé par l'émetteur, ce qui permet d'éclairer le motif sans éclairer le fond. Le récepteur reçoit quant à lui des signaux de communication infrarouges au travers du badge.

Dans le cas où le boîtier comprend un tissu acoustique, comme le badge est positionné sur le trou qui traverse le boîtier et donc le tissu, l'émission des signaux lumineux visibles et la réception des signaux de communication infrarouges sont réalisées au travers du badge et ne sont donc pas perturbées par le tissu.

L'invention permet par ailleurs de mutualiser la surface du boîtier utilisée pour représenter le motif et au travers de laquelle sont reçues les signaux de communication infrarouges, ce qui permet de limiter l'encombrement et donc le coût de ces fonctions (et donc de l'équipement électrique).

On propose de plus un équipement électrique tel que précédemment décrit, comportant en outre un élément diffuseur comprenant un troisième matériau qui est agencé pour diffuser la lumière visible, l'élément diffuseur étant positionné entre le badge et l'émetteur.

On propose de plus un équipement électrique tel que précédemment décrit, dans lequel l'élément diffuseur est intégré dans le badge.

On propose de plus un équipement électrique tel que précédemment décrit, dans lequel la première portion et la deuxième portion forment une seule et même pièce.

On propose de plus un équipement électrique tel que précédemment décrit, dans lequel le badge est fabriqué en utilisant une technique de surmoulage ou une technique de bi-injection.

On propose de plus un équipement électrique tel que précédemment décrit, dans lequel le boîtier comprend un support rigide et un tissu acoustique positionné sur une surface externe du support rigide.

On propose de plus un équipement électrique tel que précédemment décrit, dans lequel le support rigide comprend un renfoncement dans lequel est positionné le badge, une profondeur du renfoncement étant sensiblement égale à une épaisseur du badge de sorte qu'une face externe du badge est affleurante au tissu acoustique.

On propose de plus un équipement électrique tel que précédemment décrit, dans lequel le badge comporte au moins un pion de fixation qui traverse le boîtier et qui est assemblé avec le boîtier pour fixer le badge au boîtier.

On propose de plus un équipement électrique tel que précédemment décrit, dans lequel une extrémité libre du pion de fixation est assemblée avec une surface interne du boîtier par soudage ultrason ou par bouterollage.

On propose de plus un équipement électrique tel que précédemment décrit, comprenant en outre des moyens de protection agencés pour limiter une influence sur un fonctionnement du récepteur des signaux lumineux visibles émis par l'émetteur.

On propose de plus un équipement électrique tel que précédemment décrit, les moyens de protection comprenant un élément isolant qui saille sur une face interne du badge.

On propose de plus un équipement électrique tel que précédemment décrit, l'élément isolant étant positionné de sorte qu'un plan perpendiculaire à la face interne du badge et passant entre l'émetteur et le récepteur passe aussi par l'élément isolant.

On propose de plus un équipement électrique tel que précédemment décrit, dans lequel les moyens de protection comprennent des moyens électroniques et/ou logiciels agencés pour assurer qu'une différence entre une fréquence d'émission des signaux lumineux visibles par l'émetteur et une fréquence de modulation des signaux de communication infrarouges reçus par le récepteur est supérieure à un seuil prédéterminé.

On propose de plus un équipement électrique tel que précédemment décrit, dans lequel les moyens de protection comprennent un cache opacifiant et/ou un filtre polarisant positionné sur ou au-dessus du récepteur.

On propose de plus un équipement électrique tel que précédemment décrit, l'équipement électrique étant un décodeur ou une passerelle résidentielle ou une enceinte.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés parmi lesquels :
[Fig. 1] la figure 1 représente une vue en perspective d'un équipement électrique selon l'invention ;
[Fig. 2] la figure 2 est une figure similaire à la figure 1, sur laquelle le badge est retiré et éloigné de l'équipement électrique ;
[Fig. 3] la figure 3 représente une vue de détail de la figure 2, dans laquelle l'élément diffuseur est éloigné du badge et une portion du tissu est retirée du boîtier ;
[Fig. 4] la figure 4 représente les éléments de la figure 3 selon une vue, depuis l'intérieur du boîtier, en perspective et en coupe selon un plan parallèle à la face avant du boîtier ;
[Fig. 5] la figure 5 représente une vue de détail et en coupe de l'équipement électrique selon un plan perpendiculaire à la face avant du boîtier, représentant notamment le badge, le boîtier, l'émetteur et le récepteur ;
[Fig. 6] la figure 6 représente schématiquement un angle d'émission maximum de l'émetteur et un angle de réception maximum du récepteur.

### DESCRIPTION DETAILLEE DE L'INVENTION

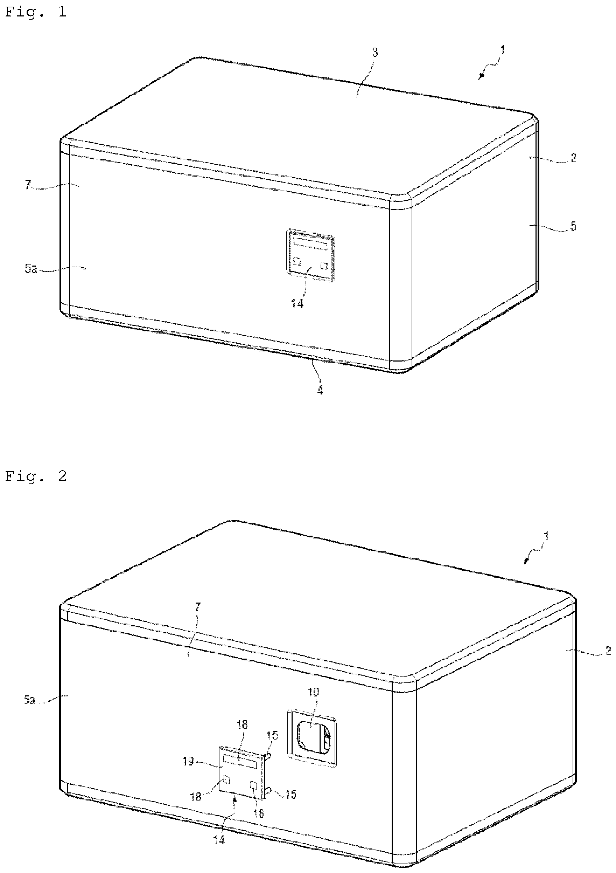

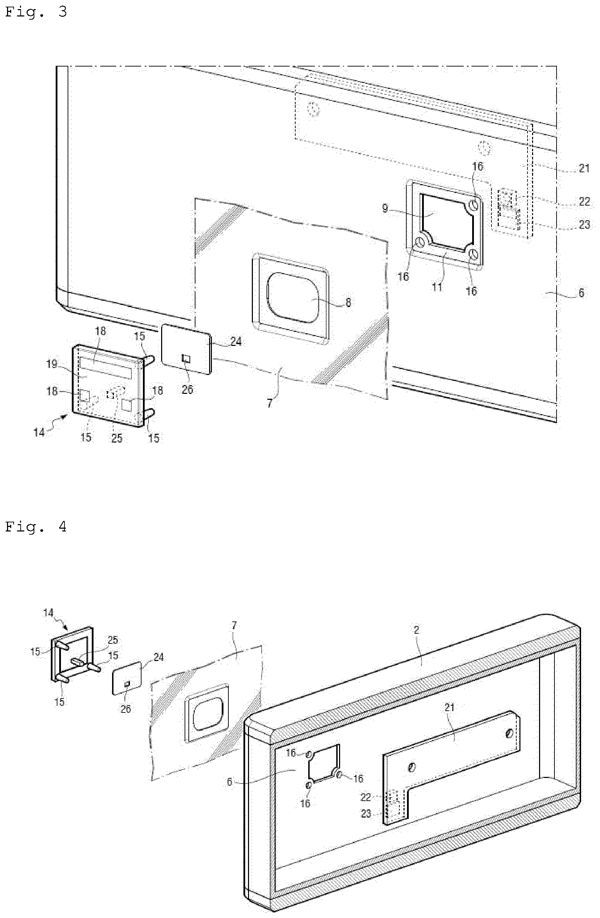

En référence aux figures 1 à 5, l'équipement électrique selon l'invention est ici un décodeur 1.

Le décodeur 1 comporte un boîtier 2 qui sépare l'intérieur du décodeur 1 de l'extérieur, et dans lequel sont intégrés différents composants. Parmi ces composants, on trouve notamment des moyens de restitution audio qui comprennent un haut-parleur et des composants électroniques agencés pour acquérir des signaux audio et émettre des signaux sonores via le haut-parleur.

Le boîtier 2 présente une forme générale parallélépipédique aux bords latéraux arrondis, et comprend une face supérieure 3, une face inférieure 4, et des faces latérales 5. Les faces latérales 5 comprennent une face avant 5a. Les faces latérales 5 du boîtier 2 sont formées par un support rigide 6 et par un tissu acoustique 7 positionné sur une surface externe du support rigide 6 et recouvrant le support rigide 6.

Ici, par « externe », on entend du côté de l'extérieur du décodeur 1, et par « interne », on entend du côté de l'intérieur du décodeur 1.

Le tissu 7 comprend une première ouverture 8 et le support rigide 6 comprend une deuxième ouverture 9 qui sont au moins partiellement superposées lorsque le tissu 7 est positionné sur le support rigide 6, ce qui forme un trou 10, traversant le support rigide 6 et le tissu 7 et donc le boîtier 2, et situé sur la face avant 5a du boîtier 2.

Ici, la première ouverture 8 présente une forme rectangulaire aux quatre coins arrondis vers l'extérieur, et la deuxième ouverture 9 présente une forme rectangulaire ayant trois coins arrondis vers l'intérieur. Les dimensions de la première ouverture 8 sont légèrement inférieures à celles de la deuxième ouverture 9.

Le support rigide 6 comprend dans son épaisseur un renfoncement 11 de section rectangulaire. Ce renfoncement 11 est formé depuis la surface externe du support rigide 6 vers l'intérieur du support rigide 6.

La deuxième ouverture 9 occupe une partie majoritaire du fond du renfoncement 11, et le reste du fond du renfoncement 11 est recouvert par le tissu 7 qui dépasse légèrement des bords de la deuxième ouverture 9.

On note que la première ouverture 8, formée dans le tissu 7, peut être réalisée en avance de phase ou a postériori après le montage du tissu 7 sur le support rigide 6.

Le décodeur 1 comporte de plus un badge 14. Les faces du badge 14 ont une forme rectangulaire. L'épaisseur du badge 14 est nettement inférieure à la longueur et à la largeur de ses faces, ce qui lui confère une forme plate.

Lorsque le décodeur 1 est assemblé, le badge 14 est intégré dans l'épaisseur du boîtier 2 et est fixé au boîtier 2 en étant positionné sur le trou 10.

Bien sûr, le trou 10 ne doit pas être visible et doit donc être inférieur aux dimensions du badge 14. Le badge 14 recouvre et bouche le trou 10.

Plus précisément, le badge 14 est positionné dans le renfoncement 11 du support rigide 6. La profondeur du renfoncement 11 est sensiblement égale à l'épaisseur du badge 14 de sorte que la face externe du badge 14 est affleurante au tissu 7. La longueur et la largeur du badge 14 sont sensiblement égales à celles du renfoncement 11, de sorte que, lorsque le badge 14 est positionné dans le renfoncement 11, il remplit le renfoncement 11.

Le badge 14 comprend de plus au moins un pion de fixation 15 (semblable à un poinçon), en l'occurrence ici trois pions de fixation 15. Chaque pion de fixation 15 s'étend depuis un coin distinct la face interne du badge 14. Au moment de l'assemblage du décodeur 1, le badge 14 est amené depuis l'extérieur du boîtier 2 dans le fond du renfoncement 11. Les pions de fixation 15 percent alors le tissu 7 puis sont introduits dans des trous de fixation 16 formés dans le support rigide 6 (au niveau des coins arrondis de la deuxième ouverture 9), de sorte qu'une fois que le badge 14 est positionné dans le renfoncement 11, chaque pion de fixation 15 traverse le boîtier 2 et l'extrémité libre de chaque pion de fixation 15 saille sur la surface interne du support rigide 6. Chaque pion de fixation 15 est alors assemblé avec le support rigide 6 du boîtier 2.

L'extrémité libre de chaque pion de fixation 15 est alors assemblée avec la surface interne du support rigide 6, par exemple par soudage ultrason ou par bouterollage.

Le badge 14 comporte de plus une première portion 16 et une deuxième portion 17.

La première portion 16 comprend un premier matériau qui est transparent ou translucide à la lumière visible (c'est-à-dire qu'il laisse passer au moins partiellement la lumière visible). Le premier matériau est par exemple une matière plastique de type polycarbonate, intégrant possiblement un colorant transparent ou translucide. Ici, la première portion 16 laisse passer tout le spectre lumineux, dont la lumière visible. La première portion 16 laisse aussi passer les infrarouges.

La deuxième portion 17 comprend au moins un deuxième matériau qui est opaque à la lumière visible (c'est-à-dire qu'il ne laisse pas passer la lumière visible) et transparent ou translucide à la lumière infrarouge. Le deuxième matériau est par exemple une matière plastique de type polycarbonate ou MABS (pour méthacrylate de Méthyle-Acrylonitrile-Butadiène-Styrène).

La première portion 16 et la deuxième portion 17 forment ici une seule et même pièce. Le badge 14 est fabriqué en utilisant par exemple une technique de surmoulage ou une technique de bi-injection.

La première portion 16 et la deuxième portion 17 forment respectivement sur une surface externe du badge 14 (sur sa face externe en l'occurrence) un motif 18 et un fond 19 distinct du motif 18.

Le motif 18 comprend ici une barre horizontale et deux carrés situés sous les extrémités de la barre horizontale.

Le badge 14 comprend de plus un renfoncement 20 dans son épaisseur, qui est formé depuis la face interne du badge 14 vers l'intérieur du badge 14. Le rôle du renfoncement 20 sera expliqué plus bas.

Le décodeur 1 comporte de plus une carte électrique 21 qui est située à l'intérieur du boîtier 2. La carte électrique 21 est positionnée parallèlement à la face avant 5a dans laquelle est formée le trou 10, et à proximité du support rigide 6.

Un émetteur 22 et un récepteur 23 sont montés sur la carte électrique 21 et sont situés en regard du trou 10 et donc de la face interne du badge 14.

L'émetteur 22 est agencé pour émettre des signaux lumineux visibles au travers du badge 16, de manière à éclairer le motif 18 sans éclairer le fond 19.

L'émetteur 22 est ici une diode électroluminescente (LED) de type RGB (pour *Red Green Blue*). La LED est pilotée par un circuit de pilotage monté sur la carte électrique 21 et comprenant un contrôleur de LED. Le contrôleur de LED peut être programmé dans un composant utilisé aussi pour d'autres fonctions (par exemple dans un microcontrôleur), ou bien peut être un composant dédié au pilotage de la LED.

L'émetteur 22 est ainsi utilisé pour rétroéclairer le motif 18 du badge 14, c'est-à-dire pour l'éclairer depuis l'intérieur du boîtier 2. Le motif 18 se distingue ainsi très nettement du fond 19 qui, lui, n'est pas éclairé, car le deuxième matériau de la deuxième portion 17 du badge 14 est opaque à la lumière visible.

Le récepteur 23, quant à lui, est agencé pour recevoir au travers du badge 14 des signaux de communication infrarouges émis par un dispositif distinct du décodeur. Le récepteur 23 est donc un récepteur infrarouge grâce auquel le décodeur 1 peut être commandé de l'extérieur via une télécommande par exemple.

La carte électrique 21 est positionnée dans le boîtier 2 de sorte que la partie sensible de l'émetteur 22 et la partie sensible du récepteur 23 sont situées à proximité de la face interne du badge 14. Les distances entre les parties sensibles et entre la face interne du badge 14 sont typiquement comprises entre 1mm et 2cm.

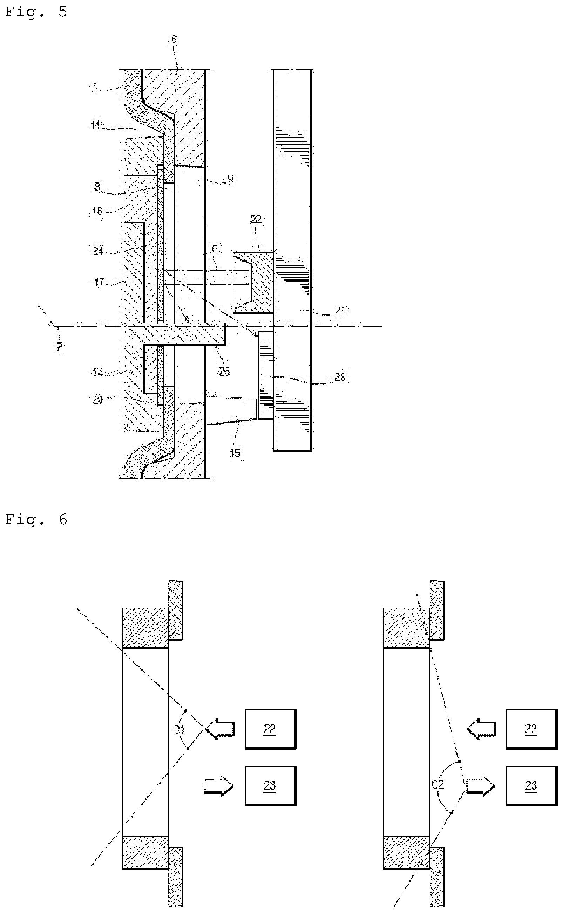

On voit sur la figure 6 l'angle d'émission maximum Θ1 de l'émetteur 22 et l'angle de réception maximum θ2 du récepteur 23.

L'angle de réception maximum θ2 du récepteur 23 dépend principalement des dimensions du trou 10 pratiqué dans la face latérale 5a du boîtier 2. Le trou 10 doit donc être suffisamment grand pour maximiser l'angle de réception maximum θ2 du récepteur 23.

L'angle d'émission maximum Θ1 de la LED dépend bien sûr des dimensions de la première portion 16 du badge 14, et notamment de la largeur et de la longueur des différents éléments de la première portion 16 sur la face externe du badge 14. L'angle d'émission maximum Θ1 de la LED dépend aussi de la distance de la LED au badge 14 : plus la LED est proche du badge 14, plus l'angle d'émission maximum Θ1 est important, et moins les dimensions du badge 14 auront besoin d'être importantes.

Par ailleurs, à cause de l'encombrement, la LED peut être trop lumineuse et ne pas couvrir le motif 18 de manière homogène.

Dans ce cas, il peut être pertinent d'utiliser, pour fabriquer la première portion du badge 16, un premier matériau laiteux ou opalescent, ou bien des textures dépolies.

On peut aussi (alternativement ou en combinaison), pour résoudre ce problème, utiliser un élément diffuseur 24 comprenant un troisième matériau qui est agencé pour diffuser la lumière visible.

L'élément diffuseur 24 est positionné entre le badge 14 et l'émetteur 22.

Ici, l'élément diffuseur 24 présente une forme plate et est intégré dans le badge 14 en étant positionné dans le renfoncement 20 du badge 14, qui a été décrit plus haut. L'élément diffuseur 24 constitue donc une partie majoritaire de la face interne du badge 14.

On note que la première portion 16, la deuxième portion 17 et l'élément diffuseur 24 pourraient former une seule et même pièce.

Comme le badge 14 est de taille relativement réduite, l'émetteur 22 et le récepteur 23 sont situés relativement proches l'un de l'autre sur la carte électrique 21. Du fait de cette proximité, le récepteur 23 peut capturer des signaux lumineux visibles émis par l'émetteur 22, soit de manière directe, soit de manière indirecte, les signaux lumineux visibles étant dans ce dernier cas des signaux R réfléchis par les surfaces situées à proximité du récepteur 23 (élément diffuseur 24, support rigide 6, etc.).

On utilise des moyens de protection pour régler ce problème, et donc pour limiter l'influence sur le fonctionnement du récepteur 23 des signaux lumineux visibles émis par l'émetteur 22.

Les moyens de protection comprennent ici un élément isolant 25 qui est en l'occurrence une patte saillant sur la face interne du badge 14 et qui appartient à la deuxième portion 17 du badge 14 (partie opaque à la lumière visible). L'élément isolant 25 traverse l'élément diffuseur 24 via un trou 26 pratiqué dans ce dernier.

L'élément isolant 25 est positionné de sorte qu'un plan P perpendiculaire à la face interne du badge 14 et passant entre l'émetteur 22 et le récepteur 23 passe aussi par l'élément isolant 25.

Cet élément isolant 25 forme donc une avancée qui est localisée dans une zone du badge 14 qui ne perturbe pas l'éclairage du motif. Cette avancée sert à absorber les signaux lumineux visibles réfléchis, à la manière d'une casquette.

Les moyens de protection peuvent aussi comprendre des moyens électroniques et/ou logiciels agencés pour assurer qu'une différence entre une fréquence d'émission des signaux lumineux visibles par l'émetteur 22 et une fréquence de modulation des signaux de communication infrarouges reçus par le récepteur 23 est supérieure à un seuil prédéterminé. Le seuil prédéterminé est par exemple compris entre 5kHz et 20kHz.

Les moyens de protection comprennent ici des instructions de programme informatique pour programmer le contrôleur de LED de sorte que la fréquence d'émission des signaux lumineux visibles réponde à cette contrainte.

Les moyens de protection peuvent aussi comprendre un cache opacifiant positionné sur ou au-dessus du récepteur 23, afin d'opacifier le récepteur 23 et donc de le rendre moins sensible, et/ou un filtre polarisant positionné sur ou au-dessus du récepteur 23.

Bien sûr, les différents moyens de protection décrits peuvent être utilisés individuellement ou ensemble.

Bien entendu, l'invention n'est pas limitée au mode de réalisation décrit mais englobe toute variante entrant dans le champ de l'invention telle que définie par les revendications.

L'équipement électrique dans lequel est mise en oeuvre l'invention n'est bien sûr pas nécessairement un décodeur, mais peut être un autre type d'équipement électrique, pourvu ou non de moyens de restitution audio, recouvert ou non par un tissu acoustique, et par exemple une enceinte (éventuellement connectée et ou/portable) ou une passerelle résidentielle.

Le motif formé sur le badge et rétroéclairé n'est pas nécessairement un logo ou une marque. Il peut s'agir d'un indicateur lumineux quelconque, remplissant une fonction ou bien purement esthétique : autre symbole d'interface, témoin de veille/activité, de niveau de charge, éclairage d'un bouton, etc.

Ici, par « motif », en entend la portion du badge rétroéclairée et par « fond », on entend la portion opaque à la lumière visible. Bien sûr, dans le cas d'un logo ou d'une marque (ou de tout autre symbole), le fond pourrait parfaitement représenter le logo ou la marque. Le logo ou la marque ne serait alors pas éclairé, mais se distinguerait tout autant du reste du badge qui lui serait éclairé.

On a indiqué que la première portion et la deuxième portion du badge forment ici une même pièce, mais il peut bien sûr s'agir de deux pièces distinctes assemblées lors de la fabrication du badge.

L'élément diffuseur pourrait être différent de celui décrit ici ; une feuille de polycarbonate pourrait par exemple être utilisée. L'élément diffuseur n'est pas nécessairement intégré au badge, et peut être un élément distinct positionné entre le badge et l'émetteur de lumière visible.

Le badge pourrait être fixé au boîtier de manière différente, par exemple par un système d'emboîtage élastique.

## Revendications

1. Equipement électrique, comportant :
- un boîtier (2) comprenant un trou (10) traversant le boîtier ;
- un badge (14) fixé au boîtier (2) et positionné sur le trou, le badge comportant une première portion (16) comprenant au moins un premier matériau qui est transparent ou translucide à la lumière visible,
l'équipement électrique étant **caractérisé en ce que** le badge comporte de plus une deuxième portion (17) comprenant au moins un deuxième matériau qui est opaque à la lumière visible et transparent ou translucide à la lumière infrarouge, la première portion et la deuxième portion formant respectivement sur une surface externe du badge un motif (18) et un fond (19) distinct du motif ; l'équipement électrique comportant en outre :
- un émetteur (22) et un récepteur (23) situés à l'intérieur du boîtier en regard du trou et donc du badge, l'émetteur étant agencé pour émettre des signaux lumineux visibles au travers du badge de manière à éclairer le motif sans éclairer le fond, et le récepteur étant agencé pour recevoir au travers du badge des signaux de communication infrarouges émis par un dispositif distinct de l'équipement électrique (1) .

2. Equipement électrique selon la revendication 1, comportant en outre un élément diffuseur (24) comprenant un troisième matériau qui est agencé pour diffuser la lumière visible, l'élément diffuseur étant positionné entre le badge (14) et l'émetteur (22).

3. Equipement électrique selon la revendication 2, dans lequel l'élément diffuseur est intégré dans le badge.

4. Equipement électrique selon l'une des revendications précédentes, dans lequel la première portion (16) et la deuxième portion (17) forment une seule et même pièce.

5. Equipement électrique selon la revendication 4, dans lequel le badge (14) est fabriqué en utilisant une technique de surmoulage ou une technique de bi-injection.

6. Equipement électrique selon l'une des revendications précédentes, dans lequel le boîtier comprend un support rigide (6) et un tissu acoustique (7) positionné sur une surface externe du support rigide.

7. Equipement électrique selon la revendication 6, dans lequel le support rigide comprend un renfoncement (11) dans lequel est positionné le badge (14), une profondeur du renfoncement étant sensiblement égale à une épaisseur du badge de sorte qu'une face externe du badge est affleurante au tissu acoustique.

8. Equipement électrique selon l'une des revendications précédentes, dans lequel le badge (14) comporte au moins un pion de fixation (15) qui traverse le boîtier et qui est assemblé avec le boîtier pour fixer le badge au boîtier.

9. Equipement électrique selon la revendication 8, dans lequel une extrémité libre du pion de fixation (15) est assemblée avec une surface interne du boîtier par soudage ultrason ou par bouterollage.

10. Equipement électrique selon l'une des revendications précédentes, comprenant en outre des moyens de protection agencés pour limiter une influence sur un fonctionnement du récepteur (23) des signaux lumineux visibles émis par l'émetteur (22).

11. Equipement électrique selon la revendication 10, les moyens de protection comprenant un élément isolant (25) qui saille sur une face interne du badge (14).

12. Equipement électrique selon la revendication 11, l'élément isolant (25) étant positionné de sorte qu'un plan (P) perpendiculaire à la face interne du badge et passant entre l'émetteur (22) et le récepteur (23) passe aussi par l'élément isolant.

13. Equipement électrique selon l'une des revendications 10 à 12, dans lequel les moyens de protection comprennent des moyens électroniques et/ou logiciels agencés pour assurer qu'une différence entre une fréquence d'émission des signaux lumineux visibles par l'émetteur (22) et une fréquence de modulation des signaux de communication infrarouges reçus par le récepteur (23) est supérieure à un seuil prédéterminé.

14. Equipement électrique selon l'une des revendications 10 à 13, dans lequel les moyens de protection comprennent un cache opacifiant et/ou un filtre polarisant positionné sur ou au-dessus du récepteur (23).

15. Equipement électrique selon l'une des revendications précédentes, l'équipement électrique étant un décodeur (1) ou une passerelle résidentielle ou une enceinte.

## Patentansprüche

1. Elektrische Ausrüstung, umfassend:
- ein Gehäuse (2), das ein Loch (10) enthält, welches das Gehäuse durchsetzt;
- ein Badge (14), das an dem Gehäuse (2) befestigt und auf dem Loch positioniert ist, wobei das Badge einen ersten Abschnitt (16) enthält, der mindestens ein erstes Material umfasst, das für sichtbares Licht durchsichtig oder durchlässig ist,
wobei die elektrische Ausrüstung **dadurch gekennzeichnet ist, dass** das Badge ferner einen zweiten Abschnitt (17) enthält, der mindestens ein zweites Material umfasst, das für sichtbares Licht undurchlässig und für Infrarotlicht durchsichtig oder durchlässig ist, wobei der erste Abschnitt und der zweite Abschnitt auf einer Außenfläche des Badges ein Muster (18) und einen von dem Muster verschiedenen Hintergrund (19) bilden; wobei die elektrische Ausrüstung ferner umfasst:
- einen Sender (22) und einen Empfänger (23), die sich im Inneren des Gehäuses gegenüber dem Loch und folglich dem Badge befinden, wobei der Sender ausgebildet ist, sichtbare Lichtsignale durch das Badge zu senden, um das Muster zu beleuchten, ohne den Hintergrund zu beleuchten, und der Empfänger ausgebildet ist, durch das Badge Infrarotkommunikationssignale zu empfangen, die von einer von der elektrischen Ausrüstung (1) verschiedenen Vorrichtung gesendet werden.

2. Elektrische Ausrüstung nach Anspruch 1, ferner umfassend ein Diffusorelement (24), das ein drittes Material umfasst, das ausgebildet ist, sichtbares Licht zu streuen, wobei das Diffusorelement zwischen dem Badge (14) und dem Sender (22) angeordnet ist.

3. Elektrische Ausrüstung nach Anspruch 2, bei der das Diffusorelement in das Badge integriert ist.

4. Elektrische Ausrüstung nach einem der vorhergehenden Ansprüche, bei der der erste Abschnitt (16) und der zweite Abschnitt (17) ein einziges Teil bilden.

5. Elektrische Ausrüstung nach Anspruch 4, bei der das Badge (14) hergestellt wird, indem eine Aufformtechnik oder eine Bi-Injektionstechnik verwendet wird.

6. Elektrische Ausrüstung nach einem der vorhergehenden Ansprüche, bei der das Gehäuse einen starren Träger (6) und ein akustisches Gewebe (7) umfasst, das auf einer Außenfläche des starren Trägers positioniert ist.

7. Elektrische Ausrüstung nach Anspruch 6, bei der der starre Träger eine Vertiefung (11) umfasst, in der das Badge (14) positioniert ist, wobei eine Tiefe der Vertiefung im Wesentlichen gleich einer Dicke des Badges ist, derart, dass eine Außenfläche des Badges bündig mit dem akustischen Gewebe abschließt.

8. Elektrische Ausrüstung nach einem der vorhergehenden Ansprüche, bei der das Badge (14) mindestens einen Befestigungszapfen (15) umfasst, der das Gehäuse durchsetzt und mit dem Gehäuse verbunden ist, um das Badge am Gehäuse zu befestigen.

9. Elektrische Ausrüstung nach Anspruch 8, bei der ein freies Ende des Befestigungszapfens (15) mit einer Innenfläche des Gehäuses durch Ultraschallschweißen oder Schellen verbunden ist.

10. Elektrische Ausrüstung nach einem der vorhergehenden Ansprüche, ferner umfassend Schutzmittel, die ausgebildet sind, einen Einfluss auf eine Funktionsweise des Empfängers (23) der sichtbaren Lichtsignale, die von dem Sender (22) gesendet werden, zu begrenzen.

11. Elektrische Ausrüstung nach Anspruch 10, wobei die Schutzmittel ein Isolierelement (25) umfassen, das auf einer Innenfläche des Badges (14) vorsteht.

12. Elektrische Ausrüstung nach Anspruch 11, wobei das Isolierelement (25) derart positioniert ist, dass eine Ebene (P), die senkrecht zur Innenfläche des Badges ist und zwischen dem Sender (22) und dem Empfänger (23) verläuft, auch durch das Isolierelement verläuft.

13. Elektrische Ausrüstung nach einem der Ansprüche 10 bis 12, bei der die Schutzmittel elektronische Mittel und/oder Softwaremittel umfassen, die ausgebildet sind, sicherzustellen, dass eine Differenz zwischen einer Sendefrequenz der sichtbaren Lichtsignale des Senders (22) und einer Modulationsfrequenz der von dem Empfänger (23) empfangenen Infrarotkommunikationssignale größer als ein vorbestimmter Schwellenwert ist.

14. Elektrische Ausrüstung nach einem der Ansprüche 10 bis 13, bei der die Schutzmittel eine lichtundurchlässige Abdeckung und/oder ein Polarisationsfilter umfassen, das auf oder über dem Empfänger (23) positioniert ist.

15. Elektrische Ausrüstung nach einem der vorhergehenden Ansprüche, wobei die elektrische Ausrüstung ein Decoder (1) oder ein Residential Gateway oder ein Lautsprecher ist.

## Claims

1. Electrical equipment comprising:
· a housing (2) including a hole (10) through a face of the housing;
· a badge (14) fastened to the housing (2) and positioned over the hole, the badge comprising a first portion (16) made at least of a first material that is transparent or translucent to visible light,
the electrical equipment being **characterized in that** the badge further comprises a second portion (17) made at least of a second material that is opaque to visible light and transparent or translucent to infrared light, the first and second portions forming respectively a pattern (18) and a background (19) distinct from the pattern on an outside surface of the badge;
the electrical equipment badge further comprising:
· an emitter (22) and a receiver (23) situated inside the housing facing the hole and thus facing the badge, the emitter being arranged to emit visible light signals through the badge so as to illuminate the pattern without illuminating the background, and the receiver being arranged to receive infrared communication signals emitted by a device that is distinct from the electrical equipment (1) and passing through the badge.

2. Electrical equipment according to claim 1, further comprising a diffuser element (24) made of a third material that is arranged to defuse visible light, the diffuser element being positioned between the badge (14) and the emitter (22).

3. Electrical equipment according to claim 2, wherein the diffuser element is incorporated in the badge.

4. Electrical equipment according to any preceding claim, wherein the first portion (16) and the second portion (17) together form a single part.

5. Electrical equipment according to claim 4, wherein the badge (14) is manufactured by using an overmolding technique or a bi-injection technique.

6. Electrical equipment according to any preceding claim, wherein the housing comprises a rigid support (6) and an acoustic fabric (7) positioned on an outside surface of the rigid support.

7. Electrical equipment according to claim 6, wherein the rigid support includes a setback (11) in which the badge (14) is positioned, the depth of the setback being substantially equal to the thickness of the badge, such that an outside face of the badge is flush with the acoustic fabric.

8. Electrical equipment according to any preceding claim, wherein the badge (14) includes at least one fastener peg (15) that passes through the housing and that is assembled to the housing in order to fasten the badge to the housing.

9. Electrical equipment according to claim 8, wherein a free end of the fastener peg (15) is assembled to an inside surface of the housing by ultrasonic welding or by heat staking.

10. Electrical equipment according to any preceding claim, further comprising protection means arranged to limit the extent to which visible light signals emitted by the emitter (22) influence the operation of the receiver (23).

11. Electrical equipment according to claim 10, the protection means comprise an insulating element (25) projecting from an inside face of the badge (14).

12. Electrical equipment according to claim 11, the insulating element (25) being positioned in such a manner that a plane (P) perpendicular to the inside face of the badge and passing between the emitter (22) and the receiver (23) also passes via the insulating element.

13. Electrical equipment according to any one of claims 10 to 12, wherein the protection means comprise electronic and/or software means arranged to ensure that visible light signals are emitted by the emitter (22) at a repetition rate that differs from a frequency at which the infrared communication signals received by the receiver (23) are modulated, with this difference being greater than a predetermined threshold.

14. Electrical equipment according to any one of claims 10 to 13, wherein the protection means include an opaque mask and/or a polarizing filter positioned on or over the receiver (23).

15. Electrical equipment according to any preceding claim, the electrical equipment being a decoder (1) or a residential gateway or a loudspeaker.
